# EUROPEAN PATENT SPECIFICATION

(11) **EP 0 518 764 B1**
(45) Date of publication and mention of the grant of the patent: **17.05.1995**
(21) Application number: 92401613.2
(22) Date of filing: 10.06.1992
(51) Int. Cl.: B63B 3/68, B63B 5/06, E04F 15/022

(54) **A deck element system and method for installing the system**
Deckelemente-System und Verfahren zu dessen Einbau
Système d'éléments de pont et méthode pour l'installation dudit système

(30) Priority: 10.06.1991 FI 912773
(43) Date of publication of application: 16.12.1992
(73) Proprietor: SCHAUMAN WOOD OY, SF-00100 Helsinki (FI)
(72) Inventor: Kordelin, Tapio, SF-209900 Turku (FI)
(74) Representative: Hasenrader, Hubert

(56) References cited:
- FR-A- 563 467
- FR-A- 870 283
- GB-A- 173 091
- GB-A- 463 190
- GB-A- 2 085 357
- US-A- 4 360 992
- US-A- 4 462 712

## Description

The invention relates to a deck element system for installing a ship deck.

The planking of a ship deck is conventionally formed of single wooden planks which are fixed to the deck by several fastening bolts. The planks are placed at small intervals from each other so that a joint space is left between each two planks next to each other. After this, all joint spaces are filled with a stuffing mass.

This conventional method for installing planks is very complex and therefore slow to perform. The planks must be fastened at several points, consequently requiring a large number of fastening bolts. In addition, the filling of the joints between the planks is a very difficult operation. Further, the consumption of wood is high, because the planks are of solid wood.

For making the planking work more efficient, plank-imitating elements have been used instead of planks. In this case, most joints can be preformed at the element manufacturing plant, so that the installation onboard can be made more efficiently. However, the installation of elements has not been very successful so far. Problems have occurred with the reliable fastening of single elements both to the deck and to each other. Also, the installed elements tend to warp easily, with the result of a defective deck.

In joining elements, both a tongue-and-groove joint and a so-called joint spring, which is a narrow batten fastened on the side walls of elements next to each other, have been used. In installation of this kind, the greatest difficulty is how to prevent the movement of the elements sideways. Further, the joints can also easily remain too wide. In the opposite case, on the other hand, too tight joints may easily cause stepping off of the deck elements.

It is the aim of the present invention to remove the drawbacks presented hereabove and to provide a new, more efficient and secure deck element system for installing a ship deck.

FR-A-563 467 shows a deck element system for installing a ship deck according to the preamble of claim 1.

The system according to the invention is mainly characterized by the features presented in the characterizing par of the claim 1.

The invention is also related to a method for installing the deck element system. Thus it is further the purpose of the invention to provide a new, efficient and secure method to be used in the installing phase of the system. To achieve these purposes, the method according to the invention is mainly characterized by the features presented in the characterizing part of the independent claim related to the method.

In the following, the invention is described as an example with reference to the following drawings, in which
- Fig. 1: shows an embodiment of a deck element according to the invention in a plan view seen from above,
- Fig. 2: shows a view of the cross-section along the line II-II in Fig. 1,
- Fig. 3: shows an installation plank for the installation of deck elements according to the invention in a plan view from above,
- Fig. 4: shows the stage of installation of the deck elements according to Fig. 1 in a plan view seen from above,
- Fig. 5: corresponds to Fig. 4 and shows the deck elements as installed and fixed by means of an installation plank,
- Fig. 6: shows a cross-section along the line VI-VI of Fig. 4,
- Fig. 7: shows the installation of the installation plank of Fig. 3 between the deck elements of Fig. 4,
- Fig. 8: shows a cross-section along the line VIII-VIII of Fig. 5, and
- Fig. 9: shows the installation of deck elements by the method according to the invention in a perspective view.

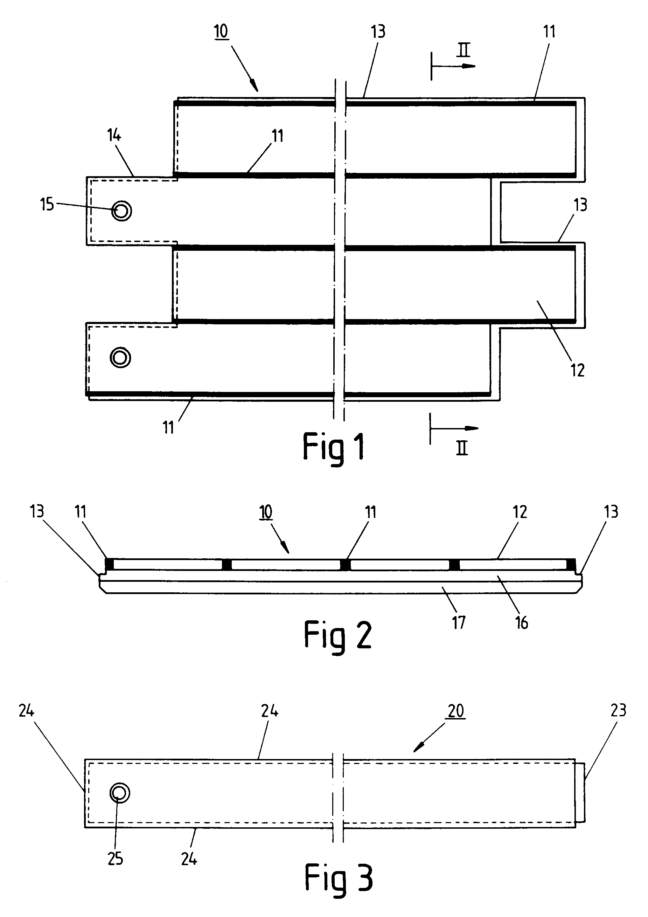

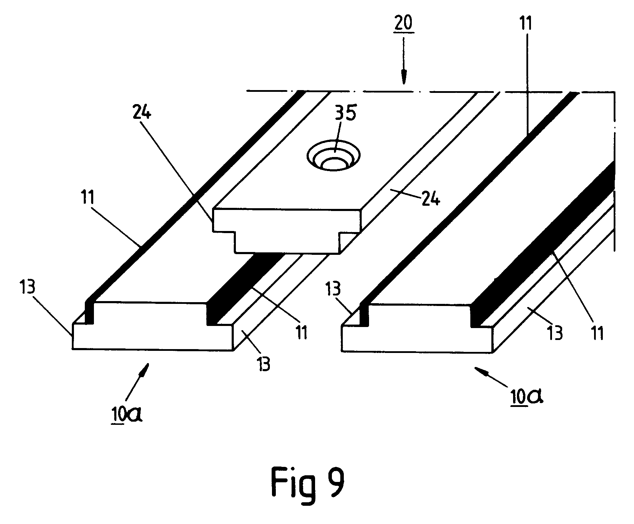

Figure 1 shows an embodiment of a deck element 10 according to the invention as seen from above. The deck element 10 comprises four adjacent planks 12, the joint bands 11 formed of a flexible mass therebetween being preformed in the longitudinal direction of the planks 12 and between the same at the factory which manufactures the deck elements 10 to be installed. Also the longitudinal side edges of the deck element 10 readily have the corresponding factory-installed joint bands 11. It should be noted that the number of planks 12 is not restricted to the number of this presented embodiment. Any number of planks 12 in limits of technical possibilities is possible. Reference is made to the embodiment shown in Fig. 9 discussed in detail herebelow.

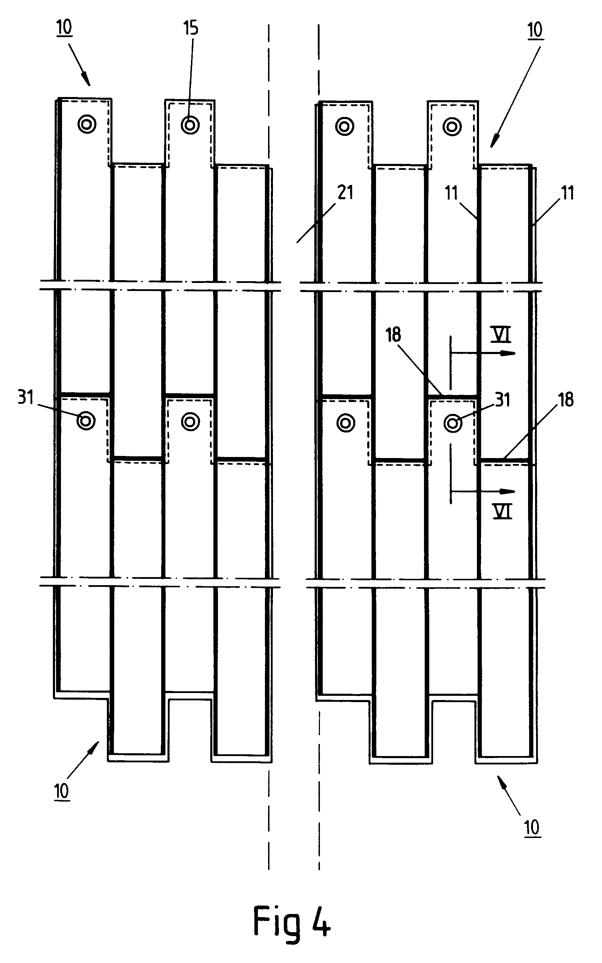

The planks 12 of the deck element 10, which are preferably of equal size, have been joined together in a manner that the edges of the element, which are substantially perpendicular to the longitudinal direction of the planks, form a fork configuration in which the adjacent planks are placed in different positions in the longitudinal direction of the element. The fork configuration is used to join the elements together by a kind of a lap or fork connection as shown in detail in Fig. 4. This is a matter affecting primarily the appearance of the ship deck, because the appearance is thus similar to that of a deck formed of separate planks.

Protruding parts 13 and 14 have been formed on all edges of the deck element 10 in a way that three edges (both of the longitudinal edges and one of the two sustantially perpendicular ones) comprise the lower protruding part 13, and only one of the two perpendicular edges, namely at the left edge of the deck element 10 of Fig. 1, comprises the protruding part 14. Also the holes 15 for the fastening bolts of elements 10 are placed near the upper protruding parts 14 only, i.e. at the left end of the element 10 in Fig. 1. The protruding parts 13 and 14 have been formed in order to accomplish halved joints between the adjacent deck elements 10 and planks 20 as well. The protruding part has the overall construction as a continuous flange or lip extending outwards and substantially having the thickness or the height corresponding to half of the total thickness or height of the deck element 10 or of the installation plank 20.

Figure 2 shows the cross-section of one advantageous embodiment of the deck element 10 of Fig. 1. As seen in the figure, the deck element 10 is a layered construction comprising three layers. Only the uppermost visible surface layer, namely the one that makes the impression that the deck is of conventional structure comprising deck planks 12, is of teak or a corresponding wood-based material that is commonly used as the surface material of a ship deck. The deck element base comprises two unitary layers 16 and 17 of plywood therebelow, with the main purpose of providing subsequently a good support for the surface layer imitating deck planks 12 and improving the strength properties of the deck element 10. Figure 2 shows also the joint bands 11 at the spaces between the surface layers imitating the deck planks 12. Joint bands 11 are also placed above the lower protruding parts 13 against the edge surfaces at the surface layer imitating the deck planks 12 facing outwards along the longitudinal edges of the element 10. The lower protruding parts 13 formed to the edges of the deck element 10 substantially comprise the layers 16 and 17 of plywood. Thus at the longitudinal edges of the deck element 10, the lower protruding parts 13 project substantially outwards from the edges of the joint bands 11.

Figure 3 shows the installation plank 20 for the installation of deck elements 10 according to the invention. It is installed last between the elements 10, as is shown in the following figures, and the purpose of the installation plank 20 is to interlock the elements 10, whose longitudinal edges are parallel with the longitudinal edges of the installation plank 20. Consequently, the protruding parts 23 and 24 surrounding the edges of the installation plank 20 are to be used in the interlocking phase as locking elements. The protruding parts on three edges (i.e. the longitudinal edges and one of the perpendicular edges) are provided with upper protruding parts 24 substantially comprising the uppermost layer of teak or the like, and only one edge, i.e. at the right end of Fig. 3, is provided with a lower protruding part 23 comprising substantially two layers of plywood. Thus the installation plank 20 can be made of similar layered construction as the deck element 10 described hereabove. Respectively, the installation plank 20 has a hole 25 for the fastening bolt at the end with an upper protruding part 24.

Figure 4 shows the stage of installation of the deck elements 10 according to Fig. 1 as seen from above. The elements 10 are installed as extensions of each other in a way that the forked edges are connected to each other by means of a lap joint whereby the protruding end parts of the connected elements 10 form a halved joint as well. At the installation stage, a feeler gauge of the width of the installation plank 20 is placed between the adjacent elements parallel with the longitudinal edges of the same. After this stage, the deck elements 10 are locked by nuts 31 in cooperation with the fastening bolts 30 fixed to the deck base 32. As seen from Fig. 4, an elongated space 21 is left between adjacent deck elements 10 having longitudinal edges of the same facing each other to restrict the said elongated space after the feeler gauge is removed, said space having exactly the width of the installation plank 20.

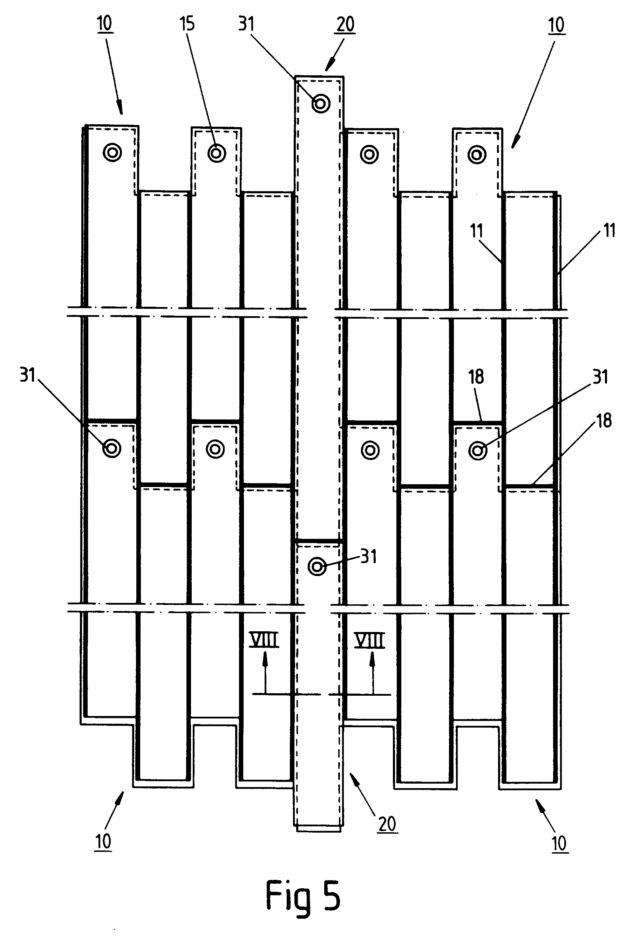

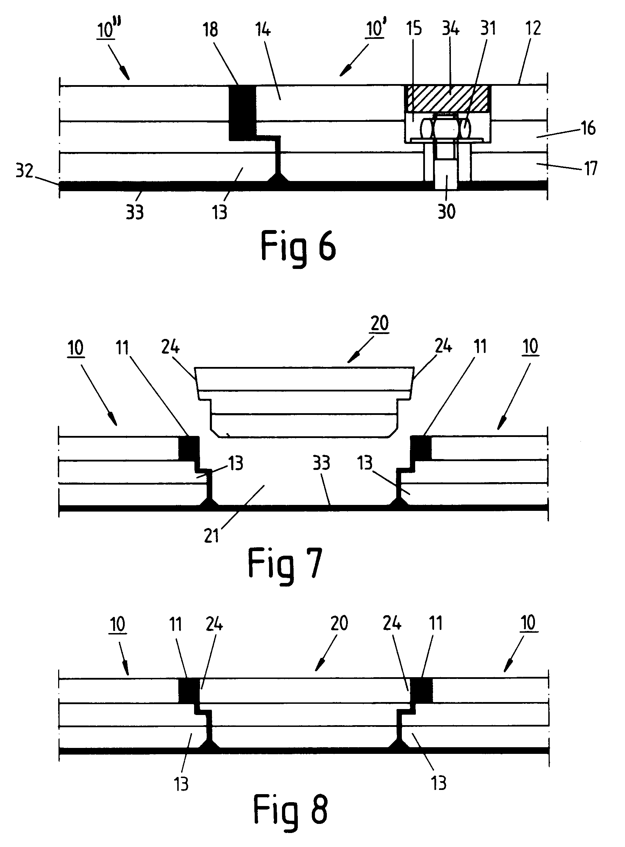

Figure 5 shows the next stage of the installation of deck elements 10. The installation planks 20 are already pressed in position in the elongated space 21 left between the deck elements 10 and connected by the nut 31 to the fastening bolt fixed to the deck base 32. Because there are upper protruding parts 24 on both longitudinal edges of the installation plank 20, they lock the deck elements 10 on both sides tightly in position. In this respect, the deck has the appearance of a finished boarding. After this, only wooden plugs 34 or the like (Fig. 6) are inserted in the fastening holes above the nuts 31, and the deck is smoothed.

Figure 6 shows a detail of the deck element structure as a cross-section along the line VI-VI of Fig. 4. Fig. 6 shows the substantially halved joint between two deck elements 10, in which the upper protruding part 14 of the first element 10′ is placed above the lower protruding part 13 of the second element 10''. A flexible joint band 18 or a corresponding filling mass is inserted between the spaced frontal surfaces of the part of the halved joint which substantially corresponds to the height of the upper protruding part 14.

A base mass 33 is spread between the deck base 32 and the elements 10 as a filler. The deck elements 10 are fixed to the deck base 32 by means of fastening bolts 30 welded to the deck base 32 and nuts 31. Finally, a wooden plug 34 or the like is inserted above the nuts 31 in the hole and the deck is smoothed.

Figure 7 shows the stage of installing the installation plank 20 in cross-section. The installation plank 20 shown in Fig. 3 is pressed in the elongated space 21 between the adjacent deck elements 10 shown in Fig. 4. The edges of the deck elements 10 at the region of the joint are equipped with joint bands 11 as described above so that a similar appearance will be achieved also between the longitudinal edges of the planks 20 and the adjacent elements 10 as compared with the adjacent planks 12 or the surface layer imitating the planks 12 in an individual deck element 10. The stuffing of the joint is further secured by the stuffing mass 33 spread on the deck base 32 which during installation also fills any slits between installation planks 20 and deck elements 10 as well as between the adjacent deck elements 10.

As described hereabove, the installation plank 20 is also locked by a locking nut to the deck base 32. Figure 8 shows how the upper protruding parts 24 of the installation plank 20 press the lower protruding parts 13 of the adjacent deck elements 10 and lock the deck elements 10 according to the invention efficiently in position against the deck base 32.

Figure 9 shows a method for installation of deck plank elements 10a instead of elements. Planks of solid teak can be used to form deck plank elements 10a similar to those presented in Figs. 1-8. The deck plank elements 10a facing the deck base have lower protruding parts 13 and joint bands 11 readily in position. Correspondingly, an installation plank 20 with upper protruding parts 24 is inserted in every other elongated space in a manner described hereabove.

The planking is locked in position by fastening bolts to be installed through holes 35 in the installation plank 20. In comparison with conventional planking, the method according to the invention provides the advantage that only every other installation plank needs to be fastened. Thus, only half of the number of valuable stainless bolts are needed. Consequently, the weight of the ship deck is reduced, which is advantageous also for the stability of the ship.

It is obvious to a man skilled in the art that different embodiments of the invention may vary within the limits of the claims as presented below.

## Claims

1. Deck element system for installing a ship deck, comprising
- two kinds of elements, namely the deck element (10) and the installation plank (20),
- at least two opposite edges of the deck element (10) are equipped with a lower protruding part (13), whereby two of such deck elements can be brought next to each other in a manner that both deck elements have a lower protruding part facing the same of the other deck element,
- at least two opposite edges of the installation plank (20) are equipped with an upper protruding part (24), whereby they cover substantially the lower protruding parts of the deck elements (10) when the installation plank is placed between the deck elements (10) having been placed next to each other in a manner that the lower protruding parts are facing each other, and
- at least the installation plank (20) is equipped with means (15, 25) to provide the fastening of the deck element system (10, 20) to the counter means in the deck base (32), **characterized**
in that the two edges of the deck element (10), which combine the two edges equipped with lower protruding parts (13) to be installed together with the upper protruding parts (24) of the installation plank (20), are both formed as a forked configuration with an inverse order of the forked configuration at the opposite first and second edges, so as to receive for installation the edge of the adjacent deck element having an inverse forked configuration, for accomplishing a lap joint and that the two edges of the deck element (10) having said inversely forked configuration have different types of protruding parts, i.e. the first forked edge having a lower protruding part (13) and the second forked edge having an upper protruding part (14), so as to form a halved joint as well between the said adjacent forked edges, whereby deck elements (10) placed for installation purposes form at least two rows of deck elements (10), each row comprising two or more deck elements (10) joined together and having therebetween along the longitudinal edges thereof an elongated space (21) for at least one installation plank (20).

2. Deck element system of claim 1, **characterized** in that the means to provide the fastening of the deck element (10) and/or the installation plank (20) is at least one hole (15, 25) penetrating the said element (10) and/or the installation plank (20).

3. Deck element system of claim 2, **characterized** in that the system further comprises plugs (34) of the like to be inserted into the holes after the locking of the deck element (10) and/or the installation plank (20).

4. Deck element system of claim 1, **characterized** in that the planks (12) of the deck element (10) are substantially equally sized and they are displaced in the longitudinal direction of the edges comprising the lower protruding parts (13) with regard to each other so as to form said forked construction.

5. Method for installing a ship deck, **characterized** in that at least part of the deck elements (10) are installed on the deck base (32) in a way that
- at the installation stage, a feeler gauge or the like is placed between two adjacent deck elements (10) for placing the deck elements at a predetermined distance from each other on the deck base (32),
- after this, these deck elements (10) are fastened to the deck base (32) in a way that they cannot move sideways,
- the feeler gauge is removed and replaced by an installation plank (20) with the primary width of the feeler gauge, and
- after this, the installation plank (20) is fastened on the deck, whereby it simultaneously presses and locks the deck elements (10) on both sides thereof in position against the deck base (32).

## Patentansprüche

1. Deckelementesystem zum Einbau auf einem Schiffsdeck mit
- zwei Arten von Elementen, nämlich einem Deckelement (10) und einer Einbauplanke (20),
- wobei wenigstens zwei einander gegenüberliegende Kanten des Deckelements (10) mit unteren, vorstehenden Teilen (13) ausgerüstet sind, wobei ferner zwei solcher Deckelemente in eine solche Stellung gebracht werden können, daß die beiden Deckelemente jeweils mit dem unteren, vorstehenden Teil aufeinander zuweisen,
- wobei wenigstens zwei einander gegenüberliegende Kanten der Einbauplanke (20) mit oberen, vorstehenden Teilen (24) versehen sind, die die unteren, vorstehenden Teile der Deckelemente (10) dann im wesentlichen abdecken, wenn die Einbauplanke zwischen den Deckelementen (10) angeordnet wird, die ihrerseits nebeneinander so angeordnet worden sind, daß die unteren, vorstehenden Teile aufeinander zuweisen, und
- wobei wenigstens die Einbauplanke (20) mit Mitteln (15, 25) versehen ist, mit deren Hilfe das Deckelementesystem (10, 20) am Decksboden (32) befestigt werden kann,
dadurch **gekennzeichnet,**
daß zwei Kanten des Deckelements (10), die die beiden Kanten, die mit den unteren, vorstehenden Teilen (13) ausgerüstet sind und die zusammen mit den oberen, vorstehenden Teilen (24) der Einbauplanke (20) eingebaut werden sollen, eine gegabelte Form haben mit einer umgekehrten Reihenfolge der Gabelung an den einander gegenüberliegenden ersten und zweiten Kanten, um auf diese Weise zum Einbau die Kante des benachbarten Deckelementes mit der umgekehrten, gegabelten Form so aufnehmen zu können, um auf diese Weise eine Überlappungsverbindung hergestellt wird, und
daß die beiden Kanten des Deckelements (10) mit der nach innen gegabelten Form verschiedene Arten von vorspringenden Teilen haben, das heißt, daß die erste, gegabelte Kante ein unteres, vorstehendes Teil (13) hat und daß die zweite, gegabelte Kante ein oberes, vorstehendes Teil (14) hat, um auf diese Weise eine Anplattung auch zwischen benachbarten, gegabelten Kanten zu ermöglichen, wobei die Deckelemente (10), die zu Einbauzwecken angeordnet sind, wenigstens zwei Reihen von Deckelementen (10) bilden, wobei jede Reihe zwei oder mehr Deckelemente (10) aufweist, die miteinander verbunden sind und die zwischen sich längs ihrer Längskanten einen länglichen Raum (21) für wenistens eine Einbauplanke (20) haben.

2. Deckelementesystem nach Anspruch 1, dadurch gekennzeichnet, daß die Mittel zum Befestigen des Deckelements (10) und/oder der Einbauplanke (20) aus wenigstens einem Loch (15, 25) besteht, das das Deckelement (10) und/oder die Einbauplanke (20) durchdringt.

3. Deckelementesystem nach Anspruch 1, dadurch gekennzeichnet, daß das System ferner Stopfen (34) oder dergleichen aufweist, die in die Löcher eingeschoben werden können, nachdem das Deckelement (10) und/oder die Einbauplanke (20) festgelegt worden ist.

4. Deckelementesystem nach Anspruch 1, dadurch gekennzeichnet, daß die Planken (12) des Deckelementes (10) im wesentlichen dieselbe Größe haben und daß sie in Längsrichtung derjenigen Kanten, die die unteren, vorstehenden Teile (13) aufweisen, in bezug aufeinander verschoben sind, um auf diese Weise eine gegabelte Form zu bilden.

5. Verfahren zum Aufbauen eines Schiffsdecks, dadurch gekennzeichnet, daß wenigstens ein Teil der Deckelemente (10) am Decksboden (32) so aufgebaut wird, daß
- beim Einbau eine Fühllehre oder dergleichen zwischen zwei benachbarte Deckelemente (10) gelegt wird, um die Deckelemente auf dem Decksboden (32) in einen vorbestimmten Abstand voneinander zu bringen,
- daß diese Deckelemente (10) danach am Decksboden (32) so befestigt werden, daß sie sich nicht seitwärts bewegen können,
- daß die Fühllehre dann entfernt und durch eine Einbauplanke (20) mit der Breite der Fühllehre ersetzt wird, und
- daß danach die Einbauplanke (20) am Deck befestigt wird, wobei sie gleichzeitig die Deckelemente (10) an ihren beiden Seiten beaufschlagt und in ihrer Stellung gegenüber dem Decksboden festlegt.

## Revendications

1. Système d'élément de pont destiné à installer un pont de navire, comportant
- deux types d'éléments, c'est-à-dire l'élément de pont (10) et la planche d'installation (20),
- au moins deux bords opposés de l'élément de pont (10) sont équipés d'une partie saillante inférieure (13), de sorte que deux éléments de pont peuvent être rapprochés d'une manière telle que les deux éléments de pont ont une partie saillante inférieure face à celle de l'autre élément de pont,
- au moins deux bords opposés de la planche d'installation (20) sont équipés d'une partie saillante (24) supérieure, de sorte qu'ils recouvrent sensiblement les parties saillantes inférieures des éléments de pont (10) lorsque la planche d'installation est placée entre les éléments de pont (10) qui ont été placés de façon adjacente d'une manière telle que les parties saillantes inférieures sont l'une en face de l'autre, et
- au moins la planche d'installation (20) est équipée de moyens (15, 25) destinés à permettre la fixation du système d'élément de pont (10, 20) sur les moyens opposés dans la base du pont (32),
caractérisé en ce que les deux bords de l'élément de pont (10), qui combinent les deux bords équipés des parties saillantes inférieures (13) devant être installées avec les parties saillantes supérieures (24) de la planche d'installation (20), sont tous deux formés avec une configuration fourchue avec un ordre inverse de la configuration fourchue au niveau des premier et deuxième bords opposés, de façon à recevoir pour l'installation le bord de l'élément de pont adjacent ayant une configuration fourchue inversée, de façon à réaliser un joint à recouvrement, et en ce que les deux bords de l'élément de pont (10) ayant ladite configuration fourchue inversée ont des types différents de parties saillantes, c'est-à-dire que le premier bord fourchu a une partie saillante inférieure (13) et le deuxième bord fourchu a une partie saillante supérieure (14), de façon à former un demi-joint entre lesdits bords fourchus adjacents, de sorte que des éléments de pont (10) placés à des fins d'installation forment au moins deux rangées d'éléments de pont (10), chaque rangée comportant deux ou plusieurs éléments de pont (10) reliés ensemble et ayant entre eux le long des bords longitudinaux un espace allongé (21) pour au moins une planche d'installation (20).

2. Système d'élément de pont selon la revendication 1, caractérisé en ce que les moyens destinés à permettre la fixation de l'élément de pont (10) et/ou de la planche d'installation (20) sont constitués par au moins un trou (15, 25) traversant ledit élément de pont (10) et/ou la planche d'installation (20).

3. Système d'élément de pont selon la revendication 2, caractérisé en ce que le système comporte en outre des bouchons (34) ou équivalent devant insérés dans les trous après le blocage des éléments de pont (10) et/ou de la planche d'installation (20).

4. Système d'élément de pont selon la revendication 1, caractérisé en ce que les planches (12) de l'élément de pont (10) sont de taille sensiblement égale et sont déplacées dans la direction longitudinale des bords comportant les parties saillantes inférieures (13) l'une par rapport à l'autre de façon à former ladite construction fourchue.

5. Procédé d'installation d'un pont de navire, caractérisé en ce qu'au moins une partie des éléments de pont (10) est installée sur la base du pont (32) d'une manière telle que,
- à l'étape d'installation, un gabarit ou équivalent est placé entre deux éléments de pont (10) adjacents afin de placer les éléments de pont à une distance prédéterminée l'un de l'autre sur la base du pont (32),
- à la suite de cela, ces éléments de pont (10) sont fixés sur la base du pont (32) d'une manière telle qu'ils ne peuvent se déplacer latéralement,
- le gabarit est enlevé et remplacé par une planche d'installation (20) avec la largeur du gabarit, et
- à la suite de cela, la planche d'installation (20) est fixée sur le pont, de sorte qu'elle appuie sur et bloque simultanément les éléments de pont (10) des deux côtés de celle-ci en position contre la base du pont (32).
